# EUROPEAN PATENT SPECIFICATION

(11) **EP 1 783 971 B1**
(45) Date of publication and mention of the grant of the patent: **27.02.2013**
(21) Application number: 06022873.1
(22) Date of filing: 02.11.2006
(51) Int. Cl.: H04L 12/58

(54) **Duplicate notification message processing method in terminal**
Verfahren zur Verarbeitung von einer doppelten Benachrichtigung in einem Endgerät
Procédé de traitement dans un terminal d'un message de notification en double

(30) Priority: 02.11.2005 KR 20050104595
(43) Date of publication of application: 09.05.2007
(73) Proprietor: LG Electronics, Inc., Seoul 150-721 (KR)
(72) Inventor: Bae, Bum-Suk, Suyeong-Gu, Busan (KR)
(74) Representative: Katérle, Axel

(56) References cited:
- WO-A-03/079637
- US-A1- 2002 078 228
- US-A1- 2002 156 854
- US-B1- 6 745 193

## Description

### BACKGROUND OF THE INVENTION

### 1. Field of the Invention

The present invention relates to a duplicate notification message processing method in a terminal, and more particularly, to a duplicate notification message processing method in a terminal, which supports a multimedia messaging service (MMS).

### 2. Description of the Related Art

At present, in the wireless terminal market, WAP (wireless application protocol) 1.x standards were established and have been used for wireless data services that can provide IP processing and Internet services for a terminal.

The WAP method mainly provides a plain text menu-based service optimized for low-bandwidth, low-specification terminals. Also, a SMS (short message service) used in GSM or IS-41 performs a message transfer service of a short length message of approximately 100 bytes in text format.

An MMS grows out of the provision of the above-said text-based service and allows users to receive diverse, high-quality multimedia content. Its system is comprised of an MMS proxy/relay server for performing IP network connection and multimedia message processing, and a server storing and managing messages.

The MMS proxy/relay server uses a SMTP (simple message transfer protocol) and a HTTP (hyper text transfer protocol) for connection to a mail service and a WAP service, respectively, which are currently performed over an IP network. Further, the SMTP protocol is used for connection to other MMS proxy/relay servers.

As related prior art, D1 = US2002/0156854 discloses a two-step notification system for an electronic mail management method and D2 = US2002/0078228 discloses an MMSG (multimedia menaging center) which is arranged to send notifications on request from the terminal.

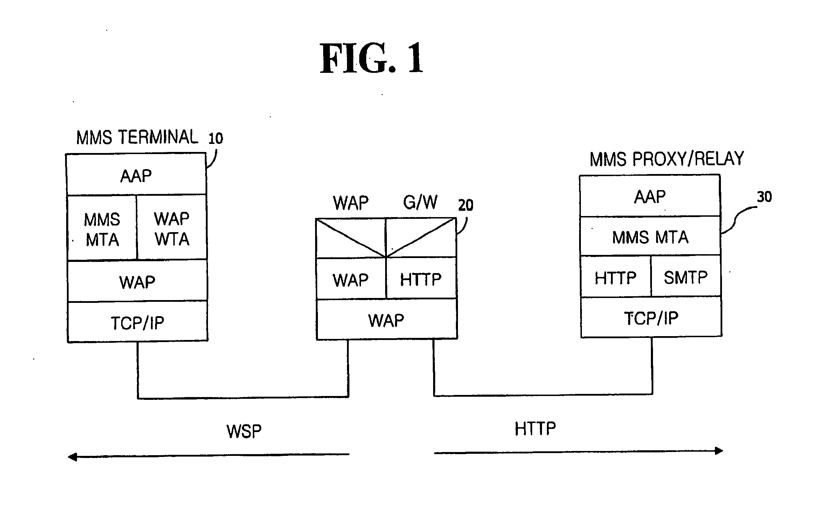

FIG. 1 shows a conventional MMS protocol stack. As shown therein, an MMS terminal 10 uses a WSP (wireless session protocol) and a HTTP protocol for connection to an MMS proxy/relay server (hereinafter, referred to as an MMS server) 30 via a WAP gateway 20.

And, the MMS server 30 uses a SMTP protocol, which is currently widely known as a mail protocol, for connection to other MMS servers. The procedure of the MMS service will be explained below.

First, a transmission side terminal receives an attached mail message of a multimedia file which is sent by a message sender through an Internet network by using the SMTP protocol. And, the transmission side terminal parses the mail message with reference to the corresponding mail recipient profile, and converts media contents (text and image) in the mail message so as to be optimized for a receiving side terminal.

The profile information contains information about the use of the receiving side terminal, such as, availability of MMS support, resolution, the number of supported colors, memory capacity, and so forth.

Subsequently, the MMS server 30 notifies the terminal of message arrival. At this point, the MMS server 30 can send a notification message (M-notification.ind) to the receiving side terminal by connection to a WAP G/W (gateway) by using the HTTP protocol, or notify the receiving side terminal of the arrival in a text message format by connection to existing SMSCs (short message service centers).

The notification message contains URI (uniform resource indicator) information having a multimedia message stored therein. For notification message management, a reserved transfer method may be used, which can transmit a message at a point of time desired by a sender by using a scheduling technique.

The receiving side terminal having received the notification message firstly sends a response message (M-Notify resp.ind) for the notification message, and is able to receive, reject, or delete the corresponding message.

When the receiving side terminal receives a message, it accesses the MMS server by using the URI of the corresponding message by a HTTP GET method. Subsequently, the MMS server capsulates a converted message and transmits it to the receiving side terminal through a WSP session. Reversely, the MMS server is able to convert a multimedia message (M-send.req) created in the transmission side terminal into a mail format or MMS message, and thereafter transmit it via the Internet or an MMS support terminal.

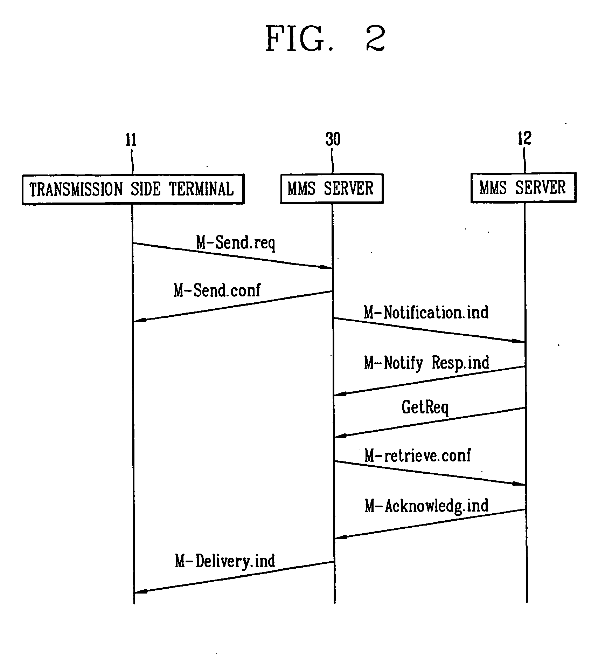

The above-stated procedure is shown in FIG. 2. FIG. 2 shows a conventional MMS transaction flow. When the transmission side terminal 11 wanting to send a multimedia message sends a M-Send.req message to the MMS server 30, the MMS server 30 sends the corresponding response message M-Send.conf to the transmission side terminal 11, and at the same time, sends to the receiving side terminal 12 a notification message M-Notification notifying of the arrival of the multimedia message.

The receiving side terminal 12 sends to the MMS server 30 a response message M-Notyfyresp.ind for the notification message M-Notification, or receives an actual multimedia message M-retrieve.conf through a GetReq request. If the receiving side terminal 12 receives the multimedia message M-retrieve.conf, it sends the corresponding response message M-Acknowledge.ind to the MMS server 30.

Afterwards, in case that the receiving side terminal 12 requests for information about whether or not the MMS server 30 has transmitted the corresponding message to the receiving side terminal 12, the MMS server 30 sends an acknowledgment message M-Delivery.ind to the receiving side terminal 12.

At present, in order to support the multimedia service as above, an MMS server of MMSC V1.0 version is used. The MMS server 30 of MMSC V1.0 version uses only an SMS push function in order to send to the receiving side terminal 12 a notification message informing of the arrival of a multimedia message. At this point, the MMS server 30 of MMSC V1.0 version does not check whether or not the notification message has been actually transmitted to the receiving side terminal 12 due to the reason that the probability of not transmitting the notification message to the receiving side terminal 12 is relatively low.

Accordingly, the MMS server 30 of MMSC V1.0 version does not transmit a notification message again even if the notification message does not arrive in the receiving side terminal 12, thus causing a low reliability of message arrival. Therefore, there is an increasing trend to change the version of a MMS server from MMSC V1.0 to MMSC V1.X in order to increase the reliability of message arrival.

The version MMSC V1.X uses a retry mechanism. The retry mechanism sends a notification message to the receiving side terminal at every retry period until it acknowledges that the notification message has arrived in the receiving side terminal.

According to the retry mechanism, the MMS server stops the transmission of a notification message M-notification: 1) when the MMS server receives a HTTP GET request having the same URI as the notification message; and 2) when the MMS server receives a notification message response having the same transaction ID as the notification message.

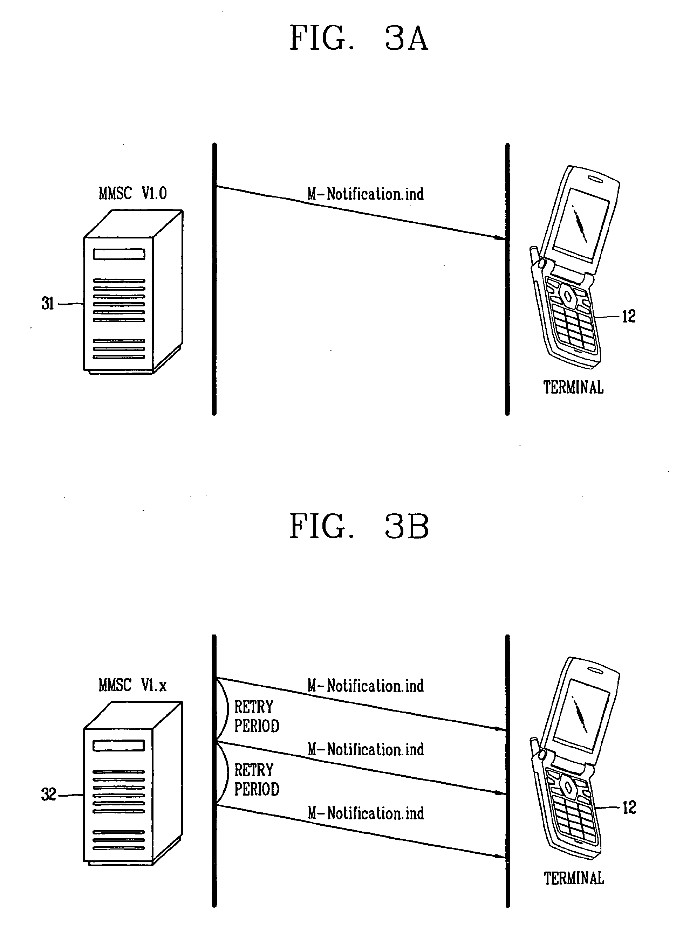

Referring to FIG. 3, the difference in service provision between the MMS server of MMSC V1.O version and the MMS server of MMSC V1.X version can be seen.
(a) of FIG. 3 shows communication between the MMS server 31 of MMSC V1.O and the receiving side terminal 12. The server sends a notification message M-Notification.ind to the receiving side terminal by using SMS push. Since the MMS server 31 of MMSC V1.O version does not use the retry mechanism, it only sends a notification message but does not involve in whether or not the receiving side terminal 12 has actually received the notification message.

On the other hand, (b) of FIG. 3 shows communication between the MMS server 32 of MMSC V1.X version and the receiving side terminal 12. The server 32 of MMSC V1.X version sends a notification message M-Notification.ind to the receiving side terminal 12 by the retry mechanism. As such, the MMS server 32 sends Noitification.ind to the receiving side terminal 12 according to a particular retry period until it receives a response message NotifyResp.ind for the notification message after sending the notification message M-Notification.ind to the terminal.

Accordingly, if the MMSC V1.X version is applied to the MMS server 32, the receiving side terminal 12 can receive the notification message from the MMS server 32 with a low probability of failure.

However, in case that a duplicate notification message is received before a multimedia message is downloaded, and the response message sent by the terminal is lost, the terminal does not send a response message for the duplicate notification message, and thus consecutively receives the notification message. That is, there may be a problem that the receiving side terminal receives too many undesired messages.

And in the case that a duplicate notification message is received after a multimedia message is downloaded, since the existing notification message is already deleted, the receiving side terminal acknowledges the duplicate notification message as a new notification message. As a result, thereby may be a case where the user would need to make a duplicate payment for receiving the same multimedia message.

In addition, once the receiving side terminal consecutively receives a duplicate notification message, the receiving side terminal repeats the procedure of receiving and deleting a notification message, thereby shortening the life span of a battery.

### BRIEF DESCRIPTION OF THE INVENTION

The present invention has been proposed to solve the above-identified problems of the background art.

The present invention may provide a message processing method, which can prevent a receiving side terminal from consecutively receiving a message requesting a response or acknowledgement, in a data transmission system for transmitting data sent by a transmission side terminal to the receiving side terminal only when there is a response or acknowledgment from the receiving side terminal.

Also, the present invention may provide a duplicate notification message processing method in a terminal, which can process an unnecessary duplicate notification message in a multimedia message service provision system utilizing a retry mechanism.

To achieve these features in accordance with the aspects of the present invention, as embodied and broadly described herein, there is provided a message processing method in a terminal supporting a multimedia messaging service (MMS), comprising the steps of: receiving from an MMS server a notification message informing of the reception of a multimedia message; if the notification message is determined to be a duplicate notification message, deleting the notification message according to whether a multimedia message corresponding to the duplicate notification message is downloaded; and if the notification message is not a duplicate notification message as a result of determination, transmitting a response message for the notification message or a messaging requesting the multimedia message.

Additionally, there is provided a method for providing a multimedia messaging service (MMS) according to the present invention, comprising the steps of: an MMS server transmitting to a terminal a notification message Noti1 informing of the reception of a multimedia message; the terminal transmitting to the MMS server a response to the notification message; re-transmitting to the terminal a notification message Noti2 unless the MMS server receives the response within a retry period; if the terminal receives Noti2 after downloading the multimedia message, replacing Noti1 by Noti2; and the terminal transmitting to the MMS server a response to Noti2.

Additionally, there is provided a terminal according to the present invention, comprising: a receiver for receiving a notification message informing of the arrival of a multimedia message; a database management module for managing the deletion and storage of the notification message according to whether the received notification message is duplicate and whether the multimedia message has been downloaded; a database for storing the notification message according to a instruction from the database management module; a memory having a message processing module for providing a response to the received notification message; and a processor for processing a message in cooperation with the receiver and the memory.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 shows a conventional MMS protocol stack;
FIG. 2 shows a conventional MMS transaction flow;
FIG. 3 shows service provision methods of an MMS server of MMSC V1.0 version and an MMS server of MMSC V1.X version;
FIG. 4 shows a message processing method in a terminal communicating with an MMS server utilizing a retry mechanism;
FIG. 5 shows a notification message processing method in a terminal according to the present invention;
FIG. 6 is a block diagram of a terminal according to the present invention;
FIG. 7 shows a first scenario in which a duplicate notification message is received and a message processing method according to the present invention;
FIG. 8 shows a second scenario in which a duplicate notification message is received and a message processing method according to the present invention; and
FIG. 9 shows a third scenario in which a duplicate notification message is received and a message processing method according to the present invention.

### DETAILED DESCRIPTION OF THE INVENTION

The inventor of the present invention has recognized that a related art message processing procedure in an MMS terminal is not suitable for communication with an MMS server that employs a retry mechanism. Based upon such recognition, the following features have been developed.

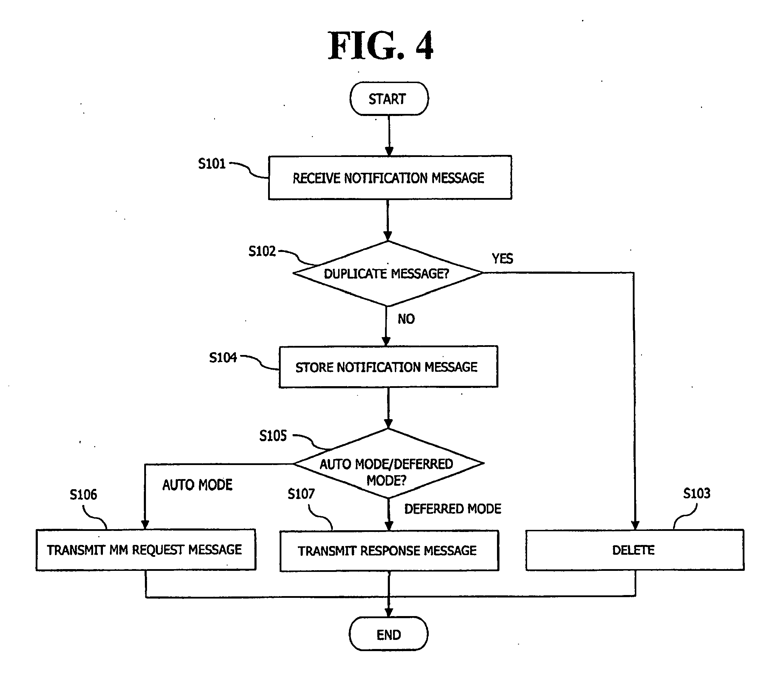

First, referring to FIG. 4, a message processing method in an MMS terminal will be described below.

A receiving side terminal receives a notification message from an s network server, such as an MMS server (S101). The notification message is a message informing that a multimedia message dispatched by a transmission side terminal has arrived in the MMS server.

The terminal having received the notification message determines whether the notification message is a duplicate notification message (S102). Since the terminal stores the notification message in a database until it downloads the corresponding multimedia message, the currently received notification message can be compared with the notification message already stored in the database.

As a result of determination, if the currently received notification message is not a duplicate notification message (i.e., the same notification message does not already exist in the database), it is newly stored in the database (S104).

Subsequently, it is checked whether the operation mode of the terminal is an auto retrieving mode or a deferred retrieving mode (S105). If the terminal is in the auto retrieving mode, a message GetReq requesting an actual multimedia message is transmitted to the MMS server after the reception of the notification message (S106). If the terminal is in the deferred retrieving mode, a response message M-NotifyResp.ind is transmitted to the MMS server in order to inform of the reception of the notification message after the reception of the notification message (S107). Meanwhile, if the received notification message is determined to be a duplicate, it is deleted (S103).

Thereupon, the inventor has recognized that the above-described message processing procedure may be further improved because of certain problems.

The first problem may arise in the step S103. The MMS server transmits a second notification message when, although the terminal having received a first notification message has transmitted a response message to the MMS server, the response message has been lost. At this point, the terminal has to transmit to the MMS server a response message for the second notification message or a multimedia request message. But, the terminal ignores any duplicate notification message unconditionally (S103), thus it may consecutively receive a duplicate notification message.

The second problem exists in the step S102. In the step of determining whether a notification message is duplicate, if a duplicate notification message is received after a multimedia message is downloaded, there occurs an error that the notification message is not properly determined to be a duplicate message. This is because the terminal deletes a stored notification message after downloading the multimedia message.

Accordingly, the present invention provides an improved notification message processing method in a terminal that receives a multimedia message service from an MMS server utilizing a retry mechanism.

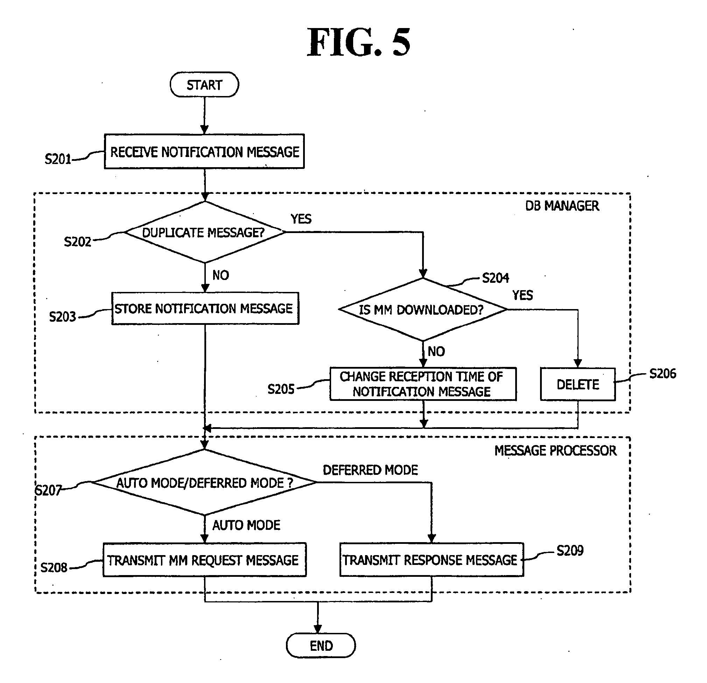

FIG. 5 shows a notification message processing method in a terminal according to an embodiment of the present invention.

First, a terminal supporting a multimedia messaging service receives a notification message transmitted from an MMS server (S201). This notification message is a message informing that a multimedia message transmitted by a transmission side terminal has arrived at the MMS server.

The terminal having received the notification message determines whether the notification message is a duplicate notification message (S202). All notification messages have a transaction identifier (TID), and the MMS server transmits notification messages with the same TID for the same multimedia message. Accordingly, if the TID of a received notification message is equal to the TID of a previously received notification message, the terminal determines the received notification message to be a duplicate message.

As a result of determination, if the notification message is a notification message for a new multimedia message, it is stored (S203). At this point, the notification message may be stored in a message database for a limited amount of time, such as for 24 hours (S203). According to an existing message processing method, the terminal stores the notification message in the database, and thereafter deletes it when a multimedia message corresponding to the notification message is downloaded. Accordingly, if a notification message is received, after a multimedia message is downloaded, due to a failure in the network environment, it is impossible to determine whether the newly received notification message is a duplicate message because the previous received notification message is deleted. To cope with this case, a notification message may be set to be stored for a certain time limit, such as 24 hours. The storage time may be set to 24 hours based upon the probability that no notification message is likely to be received after one full day no matter how poor the network environment is.

In one embodiment, the terminal can checks in an idle mode if there are any notification messages received more than 24 hours ago among the notification messages stored in the message database, and deletes such notification messages.

Meanwhile, if a received notification message is determined to be a duplicate message, it is checked whether a corresponding multimedia message (MM) has been downloaded (S204). If a corresponding multimedia message has been downloaded, the duplicate received notification message can be deleted immediately (S206). However, if no corresponding multimedia message has been downloaded, only the reception time of the notification message stored in the message database is changed (updated) (S205). Only the reception time of the notification message is changed and notified to the user so that the user can recognize a recently received multimedia message, considering the case in which the user might not download and check a multimedia message that is already stored in the message database. As a result, it is possible to prevent the same duplicate multimedia message from being stored in the message database.

The process from step S202 through step S206 may be carried out in a database (DB) manager of the terminal. That is, the database manager carries out the process steps of: 1) identifying if a currently received notification message is a duplicate message in comparison with notification messages already stored in the database, 2) storing only a non-duplicate notification message in the database, 3) identifying if a corresponding multimedia message has been downloaded upon receipt of a duplicate notification message; 4) deleting any duplicate notification message received after a corresponding multimedia message has been downloaded; and 5) changing only the reception time of the notification message if a duplicate notification message is received before a corresponding multimedia message is downloaded.

The database manager processes a notification message in a different way according to whether a received notification message is a duplicate message. Aside from this, the terminal transmits to the MMS server M-NotiResp.ind or GetReq for all received notification messages. The process steps S207 to S209 of transmitting M-NotiResp.ind or GetReq to the MMS server may be carried out in a message processor of the terminal.

First, the message processor determines whether the terminal is in an auto retrieving mode or in a deferred retrieving mode (S207). In the auto retrieving mode, the terminal transmits a multimedia request message GetReq to the MMS server (S208). In the deferred retrieving mode, the terminal transmits a response message M-NotiResp.ind thereto (S209).

That is, because the terminal unconditionally sends a GetReq or M-NotiResp.ind message to the MMS server upon receipt of a notification message, the MMS server may not consecutively send the same notification message without checking if the terminal has received a notification message.

At this time, the MMS server may receive a GetReq or M-NotiResp.ind message for the same multimedia message, which does not cause a problem because the MMS server deletes the GetReq or NotiResp.ind message having the same TID upon receipt thereof.

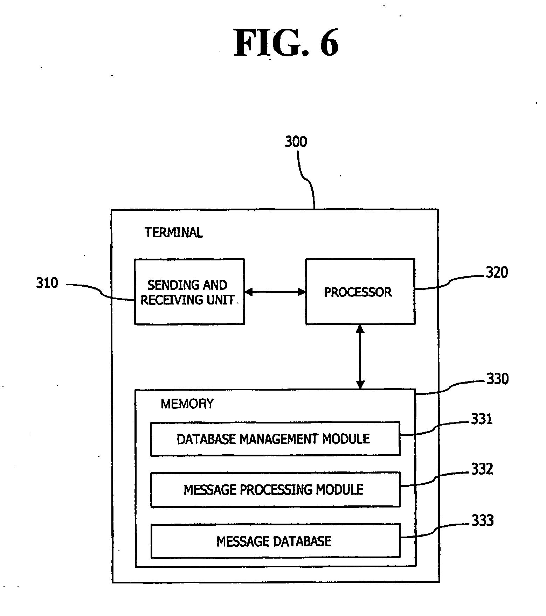

FIG. 6 is a block diagram of a terminal according to an embodiment of the present invention. As shown therein, a terminal 300 may comprise: a sending and receiving unit 310 for communicating with an MMS server; a memory 330 including a database management module 331 for managing the storage and deletion of a received message, a message processing module 332 for controlling message transmission, and a message database 333 for storing a message; and a processor 320 for cooperation with the memory 330 and the sending and receiving unit 310.

The sending and receiving unit 310 is able to receive a notification message M-Notification.ind, a multimedia message M-retrieve.conf, and so on by communication with a server that supports a multimedia messaging service, and sends a response message M-NotifyResp.ind for the notification message and a message GetReq requesting a multimedia message.

The memory 330 may include a database management module 331, a message processing module 332, and a message database 333. The database management module 331 and the message processing module 332 contain instructions executable by the processor 320.

The database management module 331 contains instructions for executing the steps of: determining whether a received notification message is a duplicate message; if a received notification message is not a duplicate message, storing the received notification message in the message database 333; if a received notification message is a duplicate message, determining whether a multimedia message has been downloaded; if a multimedia message is downloaded, deleting the notification message; and if no multimedia message has been downloaded, changing the reception time of the notification message.

The database management module 331 checks whether a message having the same TID as a previously received notification message is stored in the message database 333 in order to determine whether the currently received notification message is a duplicate message. If any messages having the same TID as the received message, this message is a duplicate message.

In addition, the database management module 331 retrieves the message database 333 in the idle mode or when the power is turned on, and deletes messages received more than 24 hours ago. The message storage period, which is a variable time period, is set to 24 hours through the experience that a message arrives within 24 hours no matter how the network environment is poor.

The message processing module 332 contains a instruction for executing the steps of: determining whether the terminal is in an auto mode or in a deferred mode; if the terminal is in the auto mode, transmitting an MM request message GetReq; and if the terminal is in the deferred mode, transmitting a response message M-NotifyResp.in. The message processing module 332 responds to the MMS server for all notification messages because it does not determine whether a received notification message is a duplicate message.

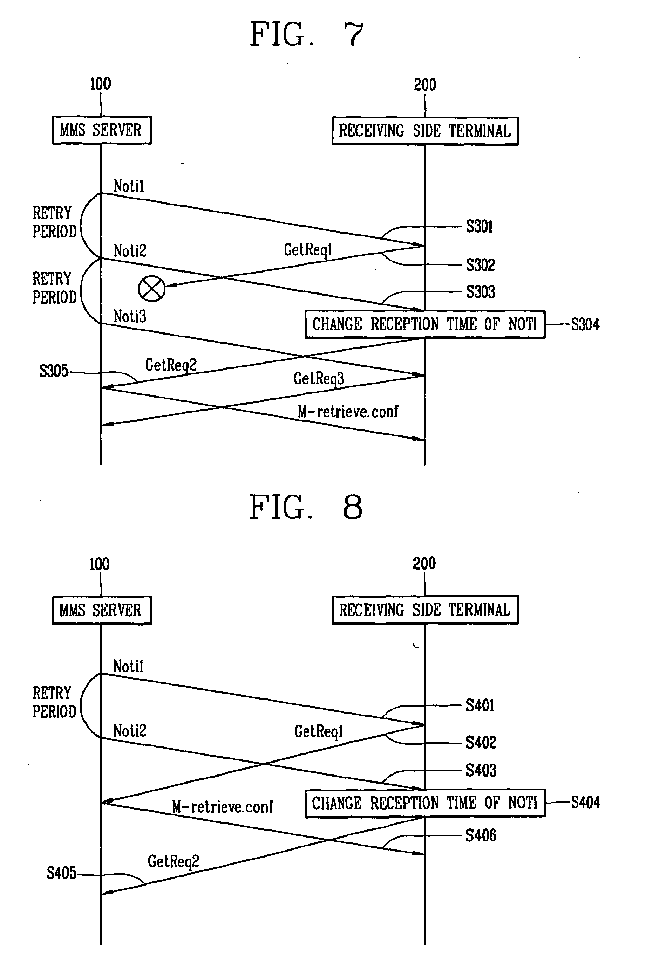

Hereinafter, a message processing method when a terminal in an auto mode receives a duplicate notification message will be described with reference to FIGS. 7 to 9.

FIG. 7 shows a first scenario in which a duplicate notification message is received and a message processing method according to the present invention. An MMS server 100 having received a multimedia message from a transmission side terminal (not shown) transmits Noti 1 (M-Notification.ind) to a receiving side terminal 200 (S301). Subsequently, the receiving side terminal 200 transmits a multimedia request message GetReq1 to the MMS server 100 (S302). However, if the GetReq1 is lost and does not arrive in the MMS server 100, and a retry period has elapsed, the MMS server 100 re-transmits a notification message Noti2 to the receiving side terminal 200 (S303). The receiving side terminal 200 having received Noti2 changes the modification time of a notification message (S304), and transmits GetReq2 to the MMS server 100(S305).

While the receiving side terminal 200 has transmitted an MM request message GetReq1 to the MMS server 100, the MMS server 100 has not received it. Thus, the receiving side terminal 200 consecutively receives a duplicate notification message unless it transmits GetReq1 to the MMS server 100 due to the duplication of a notification message. Accordingly, the receiving side terminal 200 also transmits GetReq for a duplicate notification message.

FIG. 8 shows a second scenario in which a duplicate notification message is received and a message processing method according to the present invention. When a receiving side terminal 200 receives a notification message Noti1 from a MMS server 100 (S401), the receiving side terminal 200 transmits an MM request message GetReq1 to the MMS server 100 (S402). Meanwhile, the MMS server 100 transmits Noti2 because it has received no GetReq1 during a retry period after the transmission of Noti1 (S403). Accordingly, the receiving side terminal 200 receives a duplicate notification message Noti2, and only the reception time of the notification message is changed since the receiving side terminal 200 has not received a multimedia message M-retrieve.conf yet (S404). Afterwards, the receiving side terminal 200 re-transmits a multimedia request message to the MMS server 100 (S405), which causes no problem because the MMS sever 100 ignores a duplicate multimedia request message after performing TID comparison. Accordingly, the receiving side terminal 200 receives only a multimedia message M-retrieve.conf for GetReq1 (S406).

In case of the second scenario, the receiving side terminal 200 having received a duplicate notification message basically does not have to transmit an MM request message GetReq1 to the MMS server 100. However, since the receiving side terminal 200 cannot know whether the MMS server transmits a duplicate notification message because GetReq1 is lost, or the MMS server 100 transmits a duplicate notification message because GetReq1 has arrived later than expected (after a retry period), the receiving side terminal 200 unconditionally transmits a multimedia request message to the MMS server 100 upon receipt of Noti2. That is, the receiving side terminal 200 handles the first scenario in the same manner as it handles the second scenario.

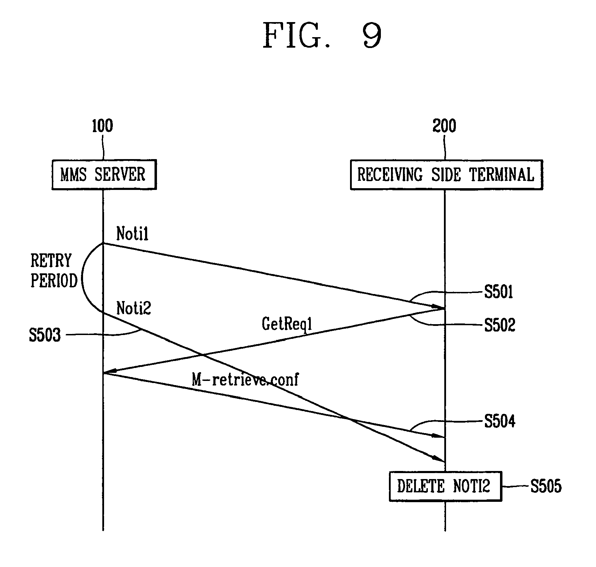

FIG. 9 shows a third scenario in which a duplicate notification message is received and a message processing method according to the present invention. When a receiving side terminal 200 receives a notification message Noti1 (S501), it transmits an MM message GetReq1 to an MMS server (S502). Meanwhile, the MMS server 100 having received no GetReq1 during a retry period re-transmits a notification message Noti2 to the receiving side terminal 200 (S503). Subsequently, when the MMS server 100 receives GetReq1, it transmits a multimedia message M-retrieve.conf to the receiving side terminal 200 (S504).

Thereupon, the receiving side terminal 200 receives a duplicate notification message Noti2 after receiving a multimedia message M-retrieve.conf, and this duplicate notification message Noti2 is deleted right away without being stored (S505). It can be seen that Noti2 is a duplicate message because Noti1 is not deleted even after a multimedia message has been downloaded.

If the receiving side terminal 200 receives a duplicate notification message after downloading a multimedia message, GetReq can be transmitted though it is not necessary to transmit a MM request message GetReq. This is because the MMS server 100 deletes a duplicate MM request message right away upon receipt thereof and does not transmit the same multimedia message.

As described above in detail, the terminal according to the present invention is advantageous in that a response is transmitted for a duplicate notification message as well as for a new notification message, so that no unnecessary duplicate message is received repeatedly. Further, the terminal according to the present invention does not receive unnecessary duplicate notification messages, thereby preventing battery consumption caused by repetition of the procedure of receiving and deleting unnecessary messages.

Furthermore, the terminal stores a notification message for a predetermined period of time without deletion after downloading a multimedia message. Thus, it can be seen that, if the terminal receives the same notification message as the notification message previously stored after downloading the multimedia message, this message is a duplicate notification message. Accordingly, it is possible to solve the problem of duplicate billing for the same multimedia message which is caused by recognizing a received duplicate notification message as a new notification message after downloading a multimedia message.

## Claims

1. A message processing method in a terminal supporting a multimedia messaging service (MMS), comprising the steps of:
- receiving (S201) a notification message informing of the reception of a multimedia message from a server (100);
**characterized by**:
- determining (S202) whether the notification message is a duplicate notification message, by using a transaction identifier, TID ;
- if it is determined that the notification message is a duplicate notification message, determining (S204) whether a multimedia message corresponding to the notification message has been downloaded;
- if it is determined that the multimedia message corresponding to the notification message has been downloaded, deleting (S206) the duplicate notification message; and
- if it is determined that the notification message is no duplicate notification message, transmitting (S208, S209) one of a response message for the notification message and a request message for the multimedia message.

2. The method of claim 1, further comprising a step of changing (S205) the reception time of the notification message to that of the duplicate notification message, if the multimedia message corresponding to the notification message has not been downloaded.

3. The method of any one preceding claim, further comprising a step of storing (S203) the notification message unless the notification message is a duplicate message.

4. The method of claim 3, further comprising the steps of:
setting a maximum period of time used for message arrival as a maximum arrival time; and
deleting a message whose maximum arrival time has passed, among stored notification messages.

5. The method of claim 4, wherein the deletion step is carried out in an idle mode.

6. The method of claim 4, wherein the deletion step is carried out when initializing the terminal.

7. The method of any one preceding claim, further comprising the steps of:
setting a maximum period of time used for message arrival as a maximum arrival time; and
storing (S203) the notification message during the maximum arrival time unless the notification message is a duplicate message.

8. The method of any one preceding claim, further comprising the step of determining the notification message to be a duplicate notification message, if a transaction identifier of the notification message is the same as that of a transaction identifier of another notification message stored in the terminal.

9. The method of any one preceding claim, further comprising transmitting (S208, S209) a response to the server (100) irrespective of whether or not the notification message is a duplicate notification message.

10. The method of claim 9, wherein the response is a message requesting the multimedia message if the terminal is in an auto retrieving mode, and is a reception acknowledgement message for the notification message if the terminal is in a deferred retrieving mode.

11. A terminal configured to perform all the steps the method of any one preceding claim.

12. The terminal of claim 11, comprising:
- a receiver (310) for receiving a notification message;
- a message database (333) for storing the notification message;
- a database management module (331) containing instructions for executing the steps of determining whether a received notification message is a duplicate message;
if a received notification message is not a duplicate message, storing the received notification message in the message database (333); if a received notification message is a duplicate message, determining whether a multimedia message corresponding to the notification message has been downloaded; if the multimedia message has been downloaded, deleting the duplicate notification message; and if no multimedia message has been downloaded, changing the reception time of the notification message;
- a message processing module (332) for providing a response to the received notification message; and
- a processor (320) for executing the instructions from the database management module (331).

13. The terminal of claim 12, wherein the message processing module (332) contains instructions which, when processed by the processor, cause execution of the steps of: determining whether the terminal is in an auto mode or in a deferred mode; if the terminal is in the auto mode, transmitting a request message to get the multimedia message corresponding to the received notification message; and if the terminal is in the deferred mode, transmitting a reception acknowledgement message for the notification message.

## Patentansprüche

1. Nachrichtenverarbeitungsverfahren in einem Endgerät, das einen Multimedianachrichtendienst (MMS) unterstützt, umfassend die Schritte:
- Empfangen (S201) einer Benachrichtigung, die über den Empfang einer Multimedianachricht informiert, von einem Server (100);
**gekennzeichnet durch**:
- Bestimmen (S202) **durch** Verwenden einer Transaktionskennung, TID, ob die Benachrichtigung eine doppelte Benachrichtigung ist;
- wenn bestimmt wird, dass die Benachrichtigung eine doppelte Benachrichtigung ist, Bestimmen (S204), ob eine Multimedianachricht, die der Benachrichtigung entspricht, heruntergeladen wurde;
- wenn bestimmt wird, dass die der Benachrichtigung entsprechende Multimedianachricht heruntergeladen wurde, Löschen (S206) der doppelten Benachrichtigung;
und
- wenn bestimmt wird, dass die Benachrichtigung keine doppelte Benachrichtigung ist, Übertragen (S208, S209) einer Antwortnachricht für die Benachrichtigung oder einer Anforderungsnachricht für die Multimedianachricht.

2. Verfahren nach Anspruch 1, das weiterhin einen Schritt des Änderns (S205) der Empfangszeit der Benachrichtigung auf die der doppelten Benachrichtigung umfasst, wenn die der Benachrichtigung entsprechende Multimedianachricht nicht heruntergeladen wurde.

3. Verfahren nach einem der vorhergehenden Ansprüche, das weiterhin einen Schritt des Speicherns (S203) der Benachrichtigung umfasst, sofern die Benachrichtigung keine doppelte Nachricht ist.

4. Verfahren nach Anspruch 3, das weiterhin die Schritte umfasst:
Festlegen einer maximalen Zeitspanne, die für das Eintreffen der Nachricht als maximale Eintreffzeit festgelegt wird; und
Löschen einer Nachricht, deren maximale Eintreffzeit verstrichen ist, unter gespeicherten Benachrichtigungen.

5. Verfahren nach Anspruch 4, wobei der Löschschritt in einem Leerlaufmodus durchgeführt wird.

6. Verfahren nach Anspruch 4, wobei der Löschschritt bei der Initialisierung des Endgeräts durchgeführt wird.

7. Verfahren nach einem der vorhergehenden Ansprüche, das weiterhin die Schritte umfasst:
Festlegen einer maximalen Zeitspanne, die für das Eintreffen der Nachricht als maximale Eintreffzeit festgelegt wird; und
Speichern (S203) der Benachrichtigung während der maximalen Eintreffzeit, sofern die Benachrichtigung keine doppelte Benachrichtigung ist.

8. Verfahren nach einem der vorhergehenden Ansprüche, das weiterhin den folgenden Schritt umfasst: Bestimmen ob die Benachrichtigung eine doppelte Benachrichtigung ist, wenn eine Transaktionskennung der Benachrichtigung identisch mit einer Transaktionskennung einer anderen im Endgerät gespeicherten Benachrichtigung ist.

9. Verfahren nach einem der vorhergehenden Ansprüche, das weiterhin das Übertragen (S208, S209) einer Antwort an den Server (100) unabhängig davon umfasst, ob die die Benachrichtigung eine doppelte Benachrichtigung ist oder nicht.

10. Verfahren nach Anspruch 9, wobei die Antwort eine Nachricht ist, die die Multimedianachricht anfordert, wenn sich das Endgerät in einem automatischen Abrufmodus befindet, und eine Empfangsbestätigungsnachricht für die Benachrichtigung ist, wenn sich das Endgerät in einem aufgeschobenen Abrufmodus befindet.

11. Endgerät, das dazu ausgebildet ist, alle Schritte des Verfahrens eines der vorhergehenden Ansprüche durchzuführen.

12. Endgerät nach Anspruch 11, das umfasst:
- einen Empfänger (310) zum Empfangen einer Benachrichtigung;
- eine Nachrichtendatenbank (333) zum Speichern der Benachrichtigung;
- ein Datenbankverwaltungsmodul (331), das Anweisungen aufweist zum Ausführen der Schritte des Bestimmens, ob eine empfangene Benachrichtigung eine doppelte Benachrichtigung ist; wenn eine empfangene Benachrichtigung keine doppelte Benachrichtigung ist, Speichern der empfangenen Benachrichtigung in der Nachrichtendatenbank (333); wenn eine empfangene Benachrichtigung eine doppelte Benachrichtigung ist, Bestimmen, ob eine Multimedianachricht, die der Benachrichtigung entspricht, heruntergeladen wurde; wenn die Multimedianachricht heruntergeladen wurde, Löschen der doppelten Benachrichtigung; und wenn keine Multimedianachricht heruntergeladen wurde, Ändern der Empfangszeit der Benachrichtigung;
- ein Nachrichtenverarbeitungsmodul (332) zum Bereitstellen einer Antwort auf die empfangene Benachrichtigung; und
- einen Prozessor (320) zum Ausführen der Anweisungen aus dem Datenbankverwaltungsmodul (331).

13. Endgerät nach Anspruch 12, wobei das Nachrichtenverarbeitungsmodul (332) Anweisungen enthält, die bei der Verarbeitung durch den Prozessor die Ausführung der Schritte bewirken: Bestimmen, ob sich das Endgerät in einem automatischen Modus oder in einem aufgeschobenen Modus befindet; wenn sich das Endgerät im automatischen Modus befindet, Übertragen einer Anforderungsnachricht, um die Multimedianachricht, die der empfangenen Benachrichtigung entspricht, abzurufen; und wenn sich das Endgerät im aufgeschobenen Modus befindet, Übertragen einer Empfangsbestätigungsnachricht für die Benachrichtigung.

## Revendications

1. Procédé de traitement d'un message dans un terminal supportant un service de messagerie multimédia (MMS), comprenant l'étape consistant à :
- recevoir (S201) un message de notification informant de la réception d'un message multimédia provenant d'un serveur (100) ;
**caractérisé par** les étapes consistant à :
- déterminer (5202) si le message de notification est un message de notification en double, en utilisant un identificateur de transaction, TID ;
- s'il est déterminé que le message de notification est un message de notification en double, déterminer (5204) si un message multimédia correspondant au message de notification a été téléchargé ;
- s'il est déterminé que le message multimédia correspondant au message de notification a été téléchargé, effacer (5206) le message de notification en double ; et
- s'il est déterminé que le message de notification n'est pas un message de notification en double, transmettre (5208, 5209) l'un parmi un message de réponse pour le message de notification et un message de demande pour le message multimédia.

2. Procédé selon la revendication 1, comprenant en outre une étape consistant à changer (5205) le moment de réception du message de notification par celui du message de notification en double, si le message multimédia correspondant au message de notification n'a pas été téléchargé.

3. Procédé selon l'une quelconque des revendications précédentes, comprenant en outre une étape consistant à mémoriser (5203) le message de notification à moins que le message de notification soit un message en double.

4. Procédé selon la revendication 3, comprenant en outre les étapes consistant à :
établir une période de temps maximal utilisée pour l'arrivée d'un message en tant que temps d'arrivée maximal ; et
effacer un message dont le temps d'arrivée maximal a été dépassé, parmi les messages de notification mémorisés.

5. Procédé selon la revendication 4, dans lequel l'étape d'effacement est réalisée dans un mode de repos.

6. Procédé selon la revendication 4, dans lequel l'étape d'effacement est réalisée lors de l'initialisation du terminal.

7. Procédé selon l'une quelconque des revendications précédentes, comprenant en outre les étapes consistant à :
établir une période de temps maximal utilisée pour l'arrivée du message en tant que temps d'arrivée maximal ; et
mémoriser (S203) le message de notification pendant le temps d'arrivée maximal à moins que le message de notification soit un message en double.

8. Procédé selon l'une quelconque des revendications précédentes, comprenant en outre l'étape consistant à déterminer le message de notification devant être un message de notification en double, si un identificateur de transaction du message de notification est le même que celui d'un identificateur de transaction d'un autre message de notification mémorisé dans le terminal.

9. Procédé selon l'une quelconque des revendications précédentes, comprenant en outre l'étape consistant à transmettre (S208, S209) une réponse au serveur (100) sans tenir compte du fait que oui ou non le message notification est un message de notification en double.

10. Procédé selon la revendication 9, dans lequel la réponse est un message demandant le message multimédia si le terminal se trouve dans un mode de récupération automatique, et est un message d'accusé de réception pour le message de notification si le terminal se trouve dans un mode de récupération différée.

11. Terminal configuré pour réaliser toutes les étapes du procédé selon l'une quelconque des revendications précédentes.

12. Terminal selon la revendication 11, comprenant :
- un récepteur (310) destiné à recevoir un message de notification ;
- une base de données de message (333) destinée à mémoriser le message de notification ;
- un module de gestion de base de données (331) contenant des instructions pour exécuter les étapes consistant à déterminer si un message de notification reçu est un message en double ; si un message de notification reçu n'est pas un message en double, mémoriser le message de notification reçu dans la base de données de message (333) ; si un message de notification reçu est un message en double, déterminer si un message multimédia correspondant au message de notification a été téléchargé ; si le message multimédia a été téléchargé, effacer le message de notification en double; et si aucun message multimédia n'a été téléchargé, changer le moment de réception du message de notification ;
- un module de traitement de message (332) destiné à délivrer une réponse au message de notification reçu ; et
- un processeur (320) destiné à exécuter les instructions provenant du module de gestion de base de données (331).

13. Terminal selon la revendication 12, dans lequel le module de traitement de message (332) contient des instructions qui, lorsque traitées par le processeur, provoquent l'exécution des étapes consistant à : déterminer si le terminal se trouve dans un mode automatique ou dans un mode différé ; si le terminal se trouve dans le mode automatique, transmettre un message de demande pour obtenir le message multimédia correspondant au message de notification reçu ; et si le terminal se trouve dans le mode différé, transmettre un message d'accusé de réception pour le message de notification.
